# EUROPEAN PATENT SPECIFICATION

(11) **EP 1 340 672 B1**
(45) Date of publication and mention of the grant of the patent: **10.11.2004**
(21) Application number: 03380005.3
(22) Date of filing: 16.01.2003
(51) Int. Cl.: B62J 9/00

(54) **Closing and securing mechanism for motorcycle cases and the like**
Schliess- und Befestigungsvorrichtung für Motorradkoffer und dergleichen
Mécanisme de fermeture et de fixation pour des coffres de motocyclettes et semblables

(30) Priority: 27.02.2002 ES 200200477
(43) Date of publication of application: 03.09.2003
(73) Proprietor: NAD, S.A., 08100 Mollet del Valles (ES)
(72) Inventor: Lucia Monforte, Pedro, 08100 Mollet del Valles (Barcelona) (ES)
(74) Representative: Ponti Sales, Adelaida

(56) References cited:
- EP-A- 0 370 368
- EP-A- 0 709 282
- EP-A- 0 709 283
- EP-A- 0 987 172
- EP-A- 1 069 035
- WO-A-01/12496
- DE-A- 4 230 972
- ES-A- 2 126 438

## Description

This invention relates to a closing and securing mechanism for motorcycle panniers and the like, of the type in which, with a single lock and therefore one key, so that the systems for pannier lid closure and attachment of the pannier to a pannier support base on the motorcycle frame can be locked and unlocked at will.

### BACKGROUND OF THE INVENTION

Known in the art are various means for locking or closure of motorcycle panniers in order to prevent manipulation thereof to gain access to the objects stowed inside them. One example of such means is described in spanish utility model no. 9402767.

The aforesaid utility model discloses a mechanism for securing and closing panniers which basically includes a hooking piece of the upper lid which is mounted and attached onto the interior tray by means of a piece by way of connecting rod. In said tray is fitted a fold-down handle to facilitate pannier transportation. A lock is also fitted, mounted on a blocking lever articulated onto the lower tray.

Document EP 0 709 282 discloses a closing and securing device for motocycle panniers comprising all the features of the preamble of claim 1.

### DESCRIPTION OF THE INVENTION

The closing and securing mechanism of the invention for panniers is of the type specially for panniers which include a lower tray and an upper lid which both define an interior space, a fold-down handle, a lock incorporated into a manually operable, swivelling front plate, which is in turn connected to a retaining device on the frame of the motorcycle and blocking means to prevent opening of the lid of the lower tray which include an inserting element attached to the tray and a receiving element forming part of the lid, as well as means for actuating the inserting element.

According to one characteristic of this invention, the actuating means of the blocking means include a lever attached to the tray and articulated directly onto the spindle which bears the fold-down handle, with the inserting element attached to the lever, said lever being provided with elastic means for inserting the inserting element under pressure into the receiving element.

Thanks to these characteristics, a pressure closing means is obtained which is of less complexity than the currently known means, locking the handle for opening of the lid and the device for retaining onto the chassis of the motorcycle . Furthermore, the number of components required for locking is reduced, making assembly easier and reducing the manufacturing costs of the pannier.

Advantageously, the fold-down handle of the closing mechanism includes locking means attached to the lever which prevent movement of said lever when the handle is in the closed position. This prevents the pannier being opened without having first released the handle by using the pertinent lock key.

In accordance with another aspect of the invention, the lock includes a double bolt with two sections, such that one of the sections immobilizes the handle when it is folded down and the other section immobilizes the swivelling front plate when the lock is in working position.

Preferably, the inserting element attached to the lever includes a pair of prolongations with a wedge-shaped projection on their end which is attached to the receiving element of the lid.

According to another characteristic of the invention, the tray includes a pair of prolongations perpendicular to the base which fit into a groove in the lid, and a third prolongation of the tray which attaches to the interior wall of said lid.

Preferably, the handle includes a groove into which the bolt of the lock in locked position is inserted. Thus, lifting of the handle is prevented when in locked position.

### DESCRIPTION OF THE DRAWINGS

In order to facilitate the description of all that has been set out above some drawings are attached which show, schematically and solely by way of non-restrictive example, a practical case of embodiment of the closing and securing mechanism of the invention for panniers, in which:
Figure 1 is a cross-section, side elevation view of a detail of the pannier, showing the closing and securing device in closed position; and
Figure 2 is side elevation view of a detail of the pannier in the position for lifting the lid from the tray.

### DESCRIPTION OF A PREFERRED EMBODIMENT

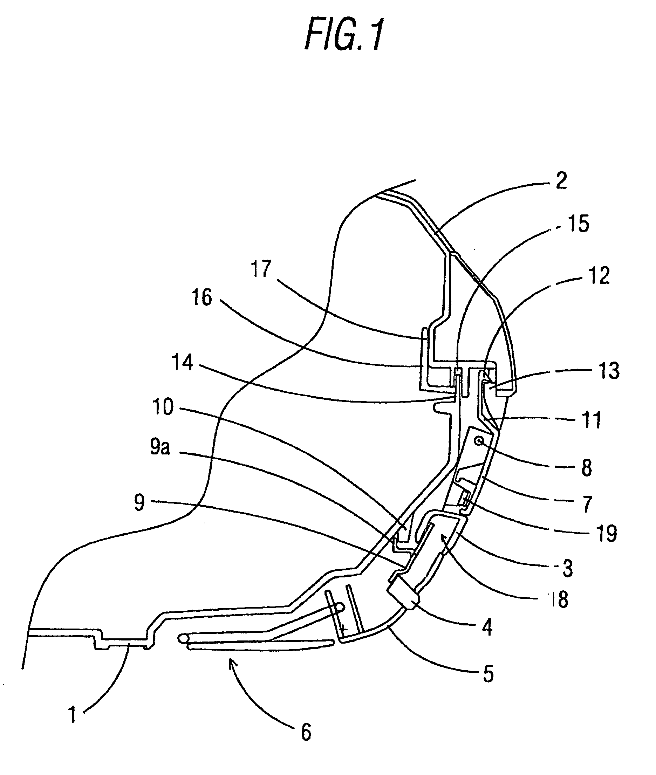

As Figure 1 shows, the closing and securing mechanism of the invention for motorcycle panniers and the like is for panniers which include a lower tray 1 and an upper lid 2 which together define an interior space, a fold-down handle 3, a lock incorporated into a manually operable, oscillating front plate 5. The lock 4 is in turn attached to a retaining device 6 on the motorcycle frame, including locking means to prevent opening of the lid 2 of the lower tray which include an inserting element attached to the tray 1 and a receiving element forming part of the lid 2 and means for actuating the inserting element.

Said means for actuating the locking means include a lever 7 attached to the tray 1 and articulated directly onto the spindle 7 which bears the fold-down handle 3, with the inserting element being attached to the lever which is provided with a helicoidal spring (not shown) to insert the introducing element under pressure into the receiving element.

The lock 4 of the pannier includes a double bolt 9 with two sections, one of which immobilizes the handle 3 when it is in folded-down position, while the other immobilizes the swivelling front plate 5 when the lock 4 is in working position. The upper bolt has a prolongation 9a for fitting into a groove defined by a projecting part 10 on the outer wall of the tray. Said double bolt 9 is made to rotate at the same time by means of the key pertaining to the lock 4.

The inserting element attached to the lever 7 includes a pair of prolongations 11 with a wedge-shaped projecting part 12 on each of their ends which is attached to the receiving element 13 of the lid 2.

The tray 1 includes a pair of prolongations 14 perpendicular to the base which fit into a slot 15 in the lid 2, and a third prolongation 16 of the tray which is attached to the interior wall 17 of said lid 2.

The handle 3 is provided with a slot 18 into which is inserted the double bolt 9 of the lock 4 when in locked position, thus preventing the handle 3 from being raised. It should be stressed than when the handle 3 is in locked position it prevents the lever 7 from being lifted independently, thus ensuring that the lid 2 cannot be lifted without the handle 3 first having been unlocked and lifted. This is due to the fact that the handle 3 prevents movement of a lug 19 situated on the interior face of the lever 7.

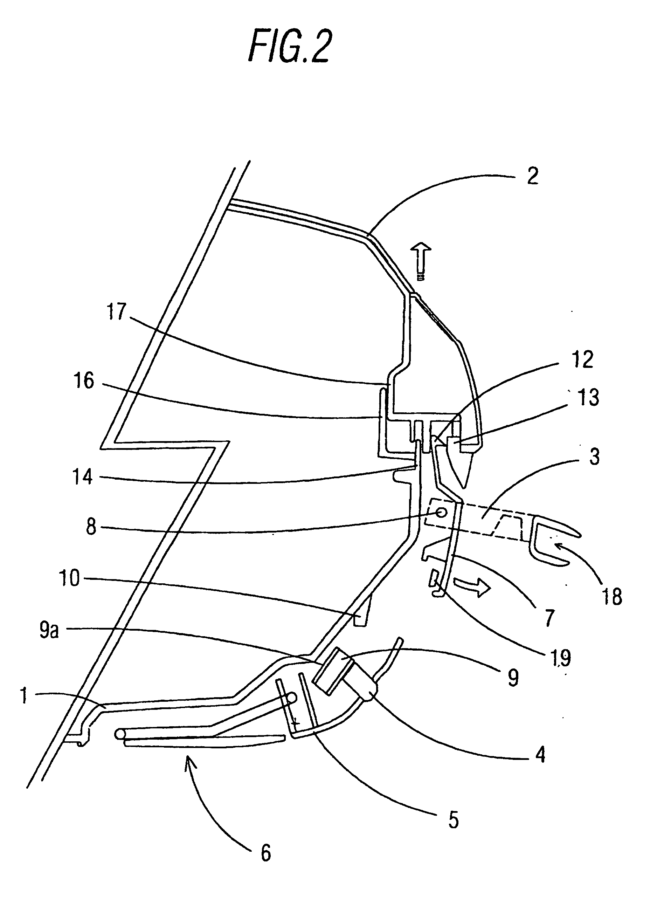

From Figure 1 it can be understood that in the closing position the handle 3, the lever 7 and the retaining device 6 are locked in position. When the lock is unlocked the aforesaid handle 3 and lever 7 are released, leaving the projecting pieces 12 released from the receiving element 14 (see Figure 2), so that the lid 2 can be opened by pressing outwards with the user's hand from the underside of the lever 7.

Independent of the object of this invention are the materials used in manufacturing the elements which make up the closing and securing mechanism for panniers described, as well as the shapes and dimensions thereof and all accessory details which might be presented, which can be replaced by others which are technically equivalent as long as they do not affect its essential nature nor depart from the sphere defined by the claims attached below.

## Claims

1. Closing and securing mechanism for motorcycle panniers and the like, especially for panniers which include a lower tray (1) and an upper lid (2) which together define an interior space, a fold-down handle (3), a lock (4) incorporated into a manually operable, swivelling front plate (5), which is in turn connected to a retaining device (6) on the frame of the motorcycle and blocking means to prevent opening of the lid (2) of the lower tray (1) which include an inserting element attached to the tray (1) and a receiving element forming part of the lid (2), as well as means for actuating the inserting element whereby the actuating means of the blocking means include a lever (7) attached to the tray (1) and the inserting element attached to the lever (7) **characterised in that** the level is articulated directly onto the spindle (8) which bears the fold-down handle (3), and said lever being provided with elastic means for inserting the inserting element under pressure into the receiving element (13).

2. Closing and securing mechanism for motorcycle panniers, as claimed in Claim 1, **characterised in that** the fold-down handle (3) includes locking means attached to the lever (7) which prevent movement of said lever (7) when the handle (3) is in the closed position.

3. Closing and securing mechanism for motorcycle panniers, as claimed in Claim 1, **characterised in that** the lock (4) includes a double bolt (9) with two sections, such that one of the sections immobilizes the handle (3) when it is folded down and the other section immobilizes the swivelling front plate (5) when the lock (4) is in working position.

4. Closing and securing mechanism for motorcycle panniers, as claimed in Claim 1, **characterised in that** the inserting element attached to the lever (7) includes a pair of prolongations (11) with a wedge-shaped projection (12) on their end which is attached to the receiving element (13) of the lid (2).

5. Closing and securing mechanism for motorcycle panniers, as claimed in Claim 1, **characterised in that** the tray includes a pair of prolongations (14) perpendicular to the base which fit into a groove (15) in the lid (2), and a third prolongation (16) of the tray (1) which attaches to the interior wall (17) of said lid (2).

6. Closing and securing mechanism for motorcycle panniers, as claimed in Claim 1, **characterised in that** the handle (3) includes a groove (18) into which the bolt (9) of the lock in locked position is inserted.

## Patentansprüche

1. Verschluss- und Befestigungsvorrichtung für Motorradkoffer und dergleichen, insbesondere für Koffer mit einer unteren Bodenschale (1) und einem oberen Deckel (2), welche einen Innenraum bilden, einem nach unten umklappbaren Handgriff (3), einem Verschluss (4), der in einer von Hand betätigbaren schwenkbaren Frontplatte (5) eingebaut ist, welche ihrerseits mit einem Befestigungselement (6) am Rahmen des Motorrads verbunden ist, und einer Verriegelungseinrichtung zum Verhindern des Öffnens des Deckels (2) der unteren Bodenschale (1) mit einem an der Bodenschale (1) angebrachten Einfügeelement und einem ein Aufnahmeelement bildenden Teil des Deckels (2) wie auch mit einer Betätigungseinrichtung für das Einfügeelement, wobei die Betätigungseinrichtung der Verriegelungseinrichtung einen an der Bodenschale ( 1 ) angebrachten Hebel (7) aufweist, und wobei das Einfügeelement am Hebel (7) angebaut ist, **dadurch gekennzeichnet, dass** der Hebel gelenkig direkt auf der Welle (8) angelenkt ist, welche den nach unten umklappbaren Handgriff (3) trägt, und dass der Hebel mit einer elastischen Einrichtung zum Einbringen des Einfügeelements unter Druck in das Aufnahmeelement (13) ausgerüstet ist.

2. Verschluss- und Befestigungsvorrichtung für Motorradkoffer nach Anspruch 1, **dadurch gekennzeichnet, dass** der nach unten umklappbare Handgriff (3) eine am Hebel (7) angebaute Sperreinrichtung aufweist, welche eine Bewegung des Hebels (7) verhindert, wenn sich der Handgriff (3) in der geschlossenen Position befindet.

3. Verschluss- und Befestigungsvorrichtung für Motorradkoffer nach Anspruch 1, **dadurch gekennzeichnet, dass** die Sperreinrichtung (4) einen zweifachen Riegel (9) mit zwei Abschnitten aufweist, so dass einer der Abschnitte den Handgriff (3) festlegt, wenn dieser nach unten geklappt ist, und der andere Abschnitt die schwenkbare Frontplatte (5) festlegt, wenn sich die Sperreinrichtung (4) in Arbeitsstellung befindet.

4. Verschluss- und Befestigungsvorrichtung für Motorradkoffer nach Anspruch 1, **dadurch gekennzeichnet, dass** das am Hebel (7) angebrachte Einfügeelement ein Paar von Verlängerungen (11) mit einem keilförmigen Vorsprung (12) an ihrem Ende aufweist, welches mit dem Aufnahmeelement (13) des Deckels (2) in Eingriff steht.

5. Verschluss- und Befestigungsvorrichtung für Motorradkoffer nach Anspruch 1, **dadurch gekennzeichnet, dass** die Bodenschale ein Paar von zu der Basis rechtwinkligen Verlängerungen (14) aufweist, die in eine Nut (15) im Deckel (2) passen, und eine dritte Verlängerung (16) der Bodenschale (1), welche an der inneren Wand (17) des Deckels (2) anliegt.

6. Verschluss- und Befestigungsvorrichtung für Motorradkoffer nach Anspruch 1, **dadurch gekennzeichnet, dass** der Handgriff (3) eine Nut (18) aufweist, in welche der Riegel (9) der Sperreinrichtung in Verschlussposition eingebracht ist.

## Revendications

1. Mécanisme de fermeture et de verrouillage pour coffres de motocyclettes et analogues, spécialement pour des coffres qui comprennent un bac inférieur (1) et un couvercle supérieur (2), qui définissent ensemble un espace intérieur, une poignée rabattable (3), une serrure (4) incorporée dans une plaque avant pivotante (5) qui peut être actionnée manuellement, qui est à son tour reliée à un dispositif de retenue (6) prévu sur le cadre de la motocyclette et des moyens de blocage destinés à empêcher l'ouverture du couvercle (2) du bac inférieur (1) qui comprennent un élément d'insertion attaché au bac (1) et un élément de réception qui fait partie du couvercle (2), ainsi que des moyens pour actionner l'élément d'insertion, dans lequel les moyens d'actionnement des moyens de blocage comprennent un levier (7) attaché au bac (1) et l'élément d'insertion attaché au levier (7), **caractérisé en ce que** le levier (7) est articulé directement sur l'axe (8) qui porte la poignée rabattable (3), et ledit levier étant muni de moyens élastiques pour insérer l'élément d'insertion sous pression dans l'élément de réception (13).

2. Mécanisme de fermeture et de verrouillage pour coffres de motocyclettes selon la revendication 1, **caractérisé en ce que** la poignée rabattable (3) comprend des moyens d'arrêt attachés au levier (7) qui empêchent ledit levier (7) de se déplacer lorsque la poignée (3) est dans la position fermée.

3. Mécanisme de fermeture et de verrouillage pour coffres de motocyclettes selon la revendication 1, **caractérisé en ce que** la serrure (4) comprend un double pêne (9) possédant deux sections, de sorte qu'une des sections immobilise la poignée (3) lorsqu'elle est rabattue et l'autre section immobilise la plaque avant pivotante (5) lorsque la serrure (4) est dans une position de travail.

4. Mécanisme de fermeture et de verrouillage pour coffres de motocyclettes selon la revendication 1, **caractérisé en ce que** l'élément d'insertion attaché au levier (7) comprend une paire de prolongements (11) ayant une saillie en forme de coin (12) sur leur extrémité qui est fixée à l'élément de réception (13) du couvercle.

5. Mécanisme de fermeture et de verrouillage pour coffres de motocyclettes selon la revendication 1, **caractérisé en ce que** le bac comprend une paire de prolongements (11) perpendiculaires à la base, qui s'ajustent dans une rainure (15) du couvercle (2), et un troisième prolongement (16) du bac (1) qui s'attache à la paroi intérieure (17) dudit couvercle (2).

6. Mécanisme de fermeture et de verrouillage pour coffres de motocyclettes selon la revendication 1, **caractérisé en ce que** la poignée (3) comprend une rainure (13) dans laquelle le pêne (9) de la serrure est inséré dans la position arrêtée.
